Europäisches Patentamt

European Patent Office

Office européen des brevets

(11) Publication number: 0 680 055 A1

# EUROPEAN PATENT APPLICATION

(21) Application number: 95106442.7

(22) Date of filing: 28.04.95

(51) Int. Cl.⁶: H01F 27/28, H01F 27/10, H01F 38/14

(30) Priority: 29.04.94 US 237494

(43) Date of publication of application:
02.11.95 Bulletin 95/44

(84) Designated Contracting States:
BE CH DE DK ES FR GB GR IT LI NL SE

(71) Applicant: Hughes Aircraft Company
7200 Hughes Terrace,
P.O. Box 80028
Los Angeles,
California 90080-0028 (US)

(72) Inventor: Hall, John T.
21831 Ambar Drive
Woodland Hills, CA 91364 (US)
Inventor: Tanzer, Herbert J.
116 Hardrock Court
Folsom, CA 95630 (US)
Inventor: Ramos, Sergio
1733 N. Broad Avenue
Wilmington, CA 90744 (US)
Inventor: Kim, Eung
Life Apartment 8 Dong 901
Songtan (KR)

(74) Representative: KUHNEN, WACKER &
PARTNER
Alois-Steinecker-Strasse 22
D-85354 Freising (DE)

(54) High frequency transformer having an internally liquid cooled winding.

(57) A high frequency transformer (10) having a primary winding (11) comprising a hollow coolant turn for transmitting cooling fluid therethrough, and a secondary winding (12) comprising a plurality of conductive turns thermally bonded using adhesive (31) to the primary winding (11). The secondary winding (12) may also be comprised of a hollow coolant turn for transmitting cooling fluid therethrough. The present invention thus uses a hybrid concept, wherein liquid cooling is used on only one to two turns of the primary and/or secondary windings (11, 12) of the transformer (10). The remaining turns of any particular winding are thermally bonded by means of adhesive (31) to the coolant turn, and therefore all the turns are cooled, one directly and the remaining indirectly, for either winding of the transformer (10). The liquid cooled coolant turn may be connected in series with a normally designed high frequency winding, with no deleterious effect on the losses or electrical performance for both the primary and secondary windings (11, 12). The present invention may also be used in constructing an inductively coupled probe for an electric vehicle battery charger.

Fig. 2

Rank Xerox (UK) Business Services
(3.10/3.09/3.3.4)

## BACKGROUND

The present invention relates generally to transformers for use in electric vehicle applications, and more particularly to a high frequency transformer having primary and secondary windings with at least one internally liquid cooled turn.

In the past, high power density transformers have been current-limited due to thermal limitations in cooling the internal copper windings of the transformer. Cooling has been easily performed at low frequency (60 and 400 Hz) by making the winding a hollow tube winding and pumping a coolant (oil, liquid, etc.) through it. This cannot be performed at high frequency (greater than 10 kHz) due excessive eddy current losses introduced by the excessive thickness of the tube that is required. Therefore, in the past, liquid cooled transformers have been limited by inadequate means for cooling the windings.

In transformer design, high frequency operation is desired to reduce the size of the magnetic core. This is based on the fundamental magnetic equation:

$$E = N^{*}d\phi/dt, \text{ where } d\phi = NdB.$$

This equation can be rewritten as:

$$Ac = \frac{E}{4fNB \cdot 10^{8}}$$

where: Ac is the cross sectional area of the core, f is the frequency of operation, N is the number of primary turns, and B is the flux density, in gauss.

Thus the size of the magnetic core can be made smaller if higher frequency is used to excite the core. However, this produces a problem with regard to the copper winding. When using a smaller copper winding, the losses therein increase as a result of the eddy currents. Eddy current losses is a collective term for the redistribution of alternating current in conductors as a function of frequency (skin effect), and the phenomenon where one circuit carrying alternating current can induce circulating currents, without making ohmic contact, in any conductive material in the immediate vicinity of the circuit (proximity effect). Thus, there is a fundamental limitation on how small the transformer core can be, which is a function of current losses in the copper windings.

Thermal limitations are worst for electric vehicle induction coupled transformers (i.e. where the transformer primary winding is designed to be physically inserted into a transformer core), since there is relatively poor thermal contact between the primary winding and the transformer core of the secondary. The transformer primary winding in this application is referred to as a probe. Metallic coolant passages typically cannot be used in this application because they are in immersed in a high magnetic field, resulting in the introduction of large eddy currents. This causes very large power losses in the liquid passages and far worse thermal problems, because the element that cools the winding must also be cooled.

It is therefore an objective of the present invention to provide for a high frequency transformer employing at least one internally cooled winding that overcomes the copper loss limitation described above.

## SUMMARY OF THE INVENTION

In order to meet the above and other objectives, the present invention is a high frequency transformer design that partially overcomes the problem of current losses in copper windings thereof. The present invention uses a hybrid concept, wherein internal liquid cooling is used on a small number of turns of primary and/or secondary windings (referred to as "coolant turns") of the transformer. When liquid cooling is referred to herein, it refers the the flow of a coolant through a hollow copper turn. The remaining turns of any particular winding are thermally bonded to the coolant turn, thus all the turns are cooled, one directly and the remaining indirectly, for either winding of the transformer.

More specifically, the present invention comprises a high frequency transformer including a primary winding having a hollow conductive coolant turn for conducting or transmitting cooling fluid therethrough, and a secondary winding comprising a plurality of conductive turns. The secondary winding may also have a hollow conductive coolant turn for conducting cooling fluid therethrough. The plurality of conductive turns of the primary and/or secondary windings are thermally bonded to the respective hollow coolant turns thereof.

The present concept uses the liquid cooled coolant turn to provide for very high power density, high power, high frequency transformer designs. The liquid cooled coolant turn may be connected in series with a normally designed high frequency helical winding, with no deleterious effect on the losses or electrical performance for both the primary and secondary windings. The present invention may also be used in constructing an inductively coupled probe for an electric vehicle battery charger, for example.

The present invention is best applicable, but is not limited, to windings with a large surface area, such as flat helix or flat spiral windings, for example, and may be directly applied to any transformer design and specifically applicable to the design of inductive coupled transformer for electric vehicles. The cooling of the probe is achieved using nonmetallic materials, which have less than superior thermal proprieties.

## BRIEF DESCRIPTION OF THE DRAWINGS

The various features and advantages of the present invention may be more readily understood with reference to the following detailed description taken in conjunction with the accompanying drawings, wherein like reference numerals designate like structural elements, and in which:

Fig. 1 is a perspective view of a charge probe that forms part of a transformer in accordance with the principles of the present invention;

Fig. 2 is a partially cutaway side view of battery charging apparatus employing a transformer in accordance with the principles of the present invention;

Fig. 3 shows a superposition model that illustrates current versus frequency rise in a conductor;

Fig. 4 illustrates a top view of a transformer in accordance with the principles of the present invention;

Fig. 5 is a side view of the transformer of Fig. 4;

Fig. 6 is an exploded view of a transformer in accordance with the principles of the present invention;

Fig. 7 is an exploded view of a transformer in accordance with the principles of the present invention

Fig. 8 shows an exploded view of a helical/partial spiral design windings that may be used in the transformer of Fig. 4; and

Fig. 9 shows an exploded view of a helical/spiral design of the windings that may be used in the transformer of Fig. 4.

## DETAILED DESCRIPTION

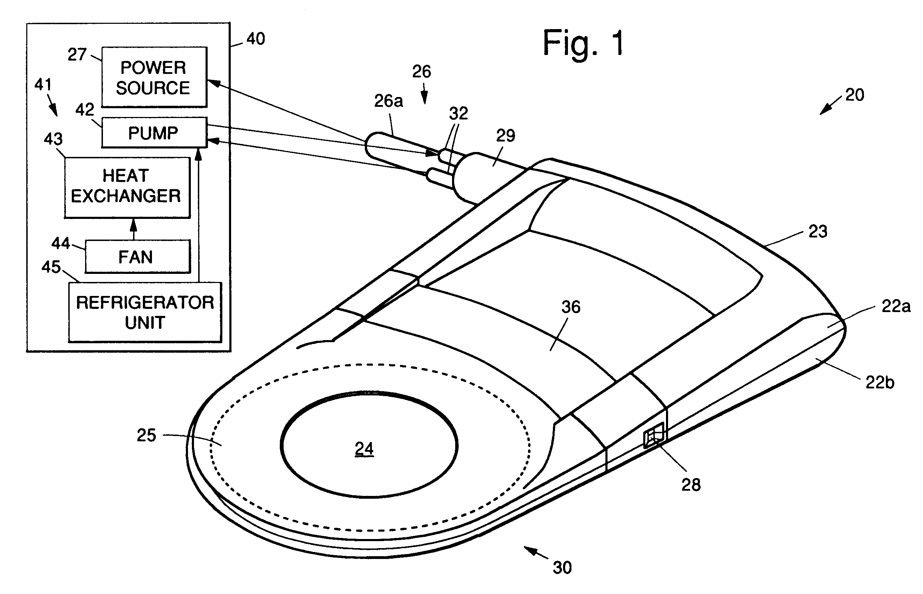

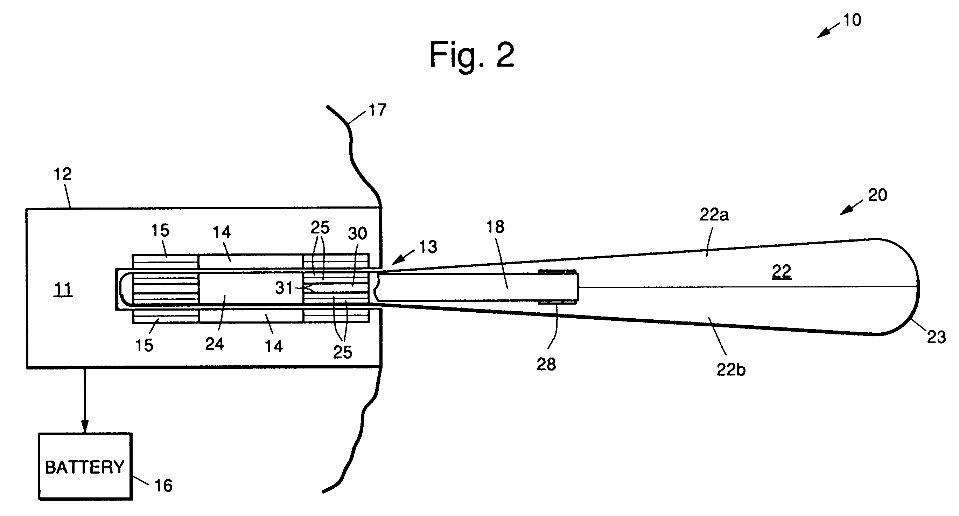

Referring to the drawing figures, Fig. 1 is a perspective view of a charge probe 20 or inductive charging coupler 20 that forms part of a transformer 10, or inductive charging apparatus 10, in accordance with the principles of the present invention. Fig. 2 is a partial cross sectional view of inductive charging apparatus 10 that includes a transformer 10 comprising the inductive charging coupler 20 of Fig. 1 inserted into a charge port 11 disposed in an electric vehicle 17, for example.

The charge port 11 includes a housing 12 having an opening 13 into which the inductive charging coupler 20 is inserted. The charge port 11 comprises a secondary core 14 and secondary windings 15 surrounding the core 14. The charge port 11 is coupled to a battery 16 of the electric vehicle 17 in which it is housed. The charge port 11 includes a plurality of metallized electromagnetic interference (EMI) fingers 18 that protrude into the opening 13 and that are adapted to press against the inductive charging coupler 20. The EMI fingers 18 may be comprised of tinned copper, for example.

The inductive charging coupler 20 is comprised of a plastic coupler housing 22 that has two mating coupler halves 22a, 22b that are configured to provide a handle 23. The inductive charging coupler 20 is comprised of a center magnetic core 24 or "puck" 24, that may be comprised of ferrite, for example. A primary winding 25 is disposed around the center magnetic core 24. The primary winding 25 is comprised of three turns. A flexible hose 26 (Fig. 1), which comprises a power cable 26a and inlet and outlet coolant lines 32, is coupled to the primary winding 25 and to an external power source 27 for coupling energy to the charging coupler 20.

The external power source 27 is generally housed within a charge station 40, that also includes a cooling system 41 comprising a coolant pump 42, a coolant heat exchanger 43, a cooling fan 44 and a refrigeration unit 45, as cooling needs require. The present invention circulates liquid coolant from the off-board cooling system 41 in the charge station 40, by routing inlet and outlet coolant lines 32 within the flexible hose 26 to the charge coupler 20. The coolant may be comprised of a high dielectric material, such as a polyalphaolefin or flouronert. The high dielectric material exhibits a high resistance such that no current is induced in the coolant from magnetic fields or direct contact with the conductive fields.

In accordance with the present invention a coolant conducting heat exchanger 30 or bladder 30, is disposed between the primary windings 25. The coolant conducting heat exchanger 30 may be bonded to the turns of the primary winding 25 using conductive adhesive 31 or epoxy, for example. Details of the primary winding 25 and coolant conducting heat exchanger 30 are discussed below.

The housing 22 has a hollow disk-shaped section having substantially flat opposed surfaces and the tapered handle extends from the disk section. An opening 34 is disposed through each of the flat opposed surfaces of the hollow disk-shaped section. The center magnetic core 24 is disposed in the opening 34 and has opposed flat surfaces that are substantially coplanar with the substantially flat opposed surfaces of the housing 22.

The charging coupler 20 is designed to be inserted into the opening 13 of the charge port 11 in order to couple current to the battery 16 from the external power source 27. The coupler has two indentations 28 along its respective sides that mate with two projecting fingers extending from the charge port, that provide a tactile feel for a user when it is inserted into the charge port.

The mating coupler halves 22a, 22b of the inductive charging coupler 20 enclose the primary winding 25 and the center magnetic core 24, and secures the hose 26 in the handle 23. A conductive plastic strip 36 may be disposed along an exterior portion of the coupler 20 between the handle 23 and the primary winding 25. The conductive plastic strip 36 engages the metallized electromagnetic interference (EMI) fingers 18 when the coupler 20 is inserted into the charge port 11. A strain relief 29 surrounds the hose 26 at a point where it exits the handle 23, and is secured by the two mating coupler halves 22a, 22b.

Given the above, a better understanding of the present invention will be derived from an understanding of the skin effect and winding losses in conductors. The skin effect loss is an increase in effective resistance due to high frequency current carried by the conductor winding alone. This occurs because as frequency rises, current density increases at the surface of the conductor winding and decreases toward zero at the center of the conductor winding. The current tails off exponentially within the conductor winding. The portion of the conductor winding that actually carries current is reduced, so the resistance at high frequency (and resulting losses) may be many times greater than at low frequency. Skin depth (sd) is defined as the distance from the surface of the conductor winding to a point where the current density is 1/e times the surface current density (where e is the natural log base), and is given by

$$sd = \sqrt{\rho / \pi^* \mu^* f}$$

where $\rho$ is the resistivity of copper and is given by $\rho = 0.69 \times 10^{-6}$ ohm-in at 20°C, and $\mu = 0.4 \pi \times 10^{-8}$.

When the current in a conductor changes rapidly, as it does at high frequency, the flux within the conductor also changes rapidly. The changing flux induces a voltage loop, or eddy, near the surface of the conductor. Since this induced voltage is within the conductor, it causes an eddy current coincident with the voltage. This eddy current reinforces a main current flow at the surface, but opposes it toward the center of the conductor. The result is that as the frequency rises, current density increases at the surface of the conductor and decreases toward zero at the center of the conductor. The current tails off exponentially within the conductor. The portion of the conductor that actually carries current is reduced, so the resistance at high frequency (and resulting high losses) can be many times greater than at low frequency.

An equation for calculating high frequency winding losses for arbitrary current waveforms is given by:

$$Rac/Rdc(\text{skin effect}) = x^*(e^{2x} - e^{-2x} + 2\sin(2x))/(e^{2x} + e(-2x) - 2\cos(2x),$$

where x is layer thickness/skin depth.

Although the current density tails off exponentially from the surface, the high frequency resistance is the same as if the current density were constant from the surface to the penetration depth, then goes abruptly to zero. Consequently, regardless of the thickness of the conductor, the minimum resistance (AC resistance at a specified frequency) is limited to the DC resistance at the skin depth. Thus, for one layer (turn) of a helical winding, the the layer thickness may be as thick as desired, with no increased losses above the skin depth. Therefore, as long as no proximity effects are introduced, the layer thickness may be made very thick to accommodate a structure to carry a coolant, as is provided by the present invention.

However, not all of the turns in a winding exhibit the proximity effect. Any turn that does not have proximity losses may be used as a coolant turn. An mmf diagram is used as any easy tool to determine which turns may be used for carrying coolant.

For multilayer windings, the proximity effect is often a dominate effect. The apparent increase in the resistance of the conductor of a winding is caused by eddy currents therein due to the magnetic fields impressed upon the conductors from other conductors in the windings. These eddy currents exist even if the winding is an open circuit. The losses exist with no net current flow, giving an infinite resistance. This is the situation with an electrostatic shield and a liquid cooled metallic heat exchanger inserted between the primary and secondary winding.

The simplest form of the winding loss equation is given by:

$$Rac/Rdc(\text{proximity effect}) = (2/3)^*(m^2-1)^*x^*(e^x - e^{-x} + 2\sin(x))/(e^x + e(-x) - 2\cos(x),$$

where x is the layer thickness/skin depth and m is the number of layers. This equation shows that the drastic increase in the losses due to proximity effects when more layers (turns) are used in a transformer winding, and why the layer thickness must be kept at value equal to the skin depth or less.

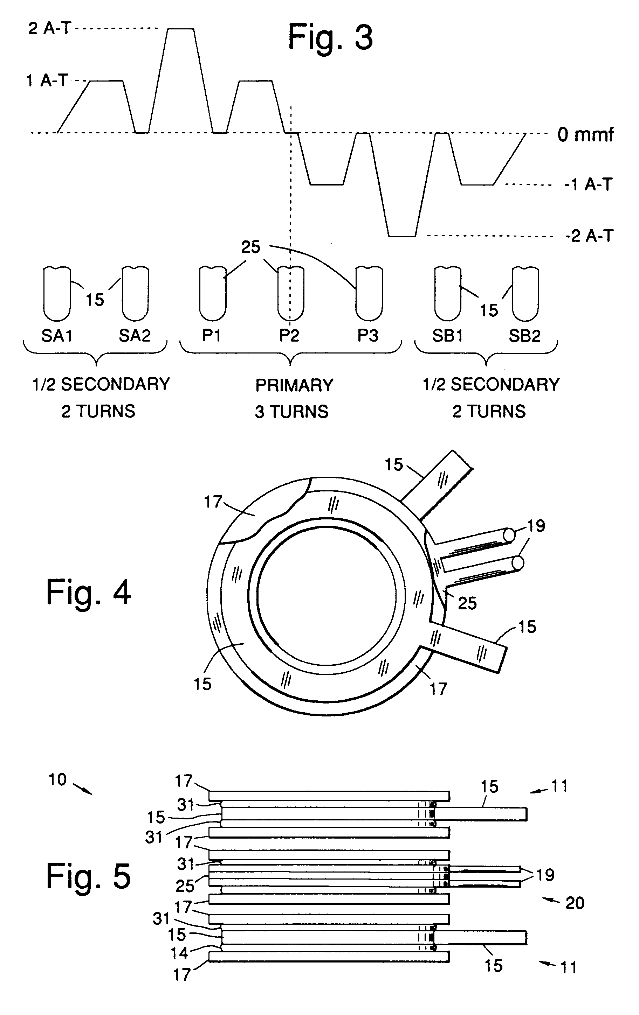

Multiple layer (turn) windings will now be discussed. The proximity losses may be reduced by interleaving the primary and secondary windings. Referring to Fig. 3, it shows a superposition model that illustrates current versus frequency rise in a conductor, and shows a transformer 10 with multi-layer primary and secondary windings 11, 12 and a frequency mmf (F) diagram (illustrated above the transformer 10). The primary winding 25 shown in Fig. 3 has three turns (P1, P2, P3), and the secondary winding 15 has four turns (SA1, SA2, SB1, SB2). The secondary winding 15 is arranged in four layers, interleaved outside the primary winding 25. The high frequency mmf diagram of Fig. 3 shows that there is no field within the conductors of the primary and secondary windings 11, 12 due to the skin effect. The fields of the center primary turn, P2, and the secondary turns, SA1 and SB1, have low fields within the conductors. The losses in these turns are all due to the skin effect, and not the proximity effect.

Fig. 3 also shows the effect when the turn/layer thickness is far greater than twice the skin depth. As seen in primary and secondary turns P2, SA1 and SB1, the current flowing on the layer surfaces is one amp (skin effect), while in turns P3, P1, SA2, and SB2 the current is one amp on one of the layer surfaces (skin effect), and two amps on the other surface (proximity effect). Also, the field between the primary and secondary windings 11, 12 is two ampere-turns, and if metal is introduced between the primary and secondary windings 11, 12, eddy current losses result in the metal.

Therefore turns SA1, SB1 and P2 may be used as the coolant turns. Since these coolant turns only experience skin loss, they may be an arbitrary thickness. An optimal thickness has been determined to be $\pi/2$ times the skin depth. The turn may be thicker, at minimal loss penalty. To minimize the proximity effect, the thickness of the non-coolant turn is designed to be at least one skin depth (i.e. approximately 8.5 mils at 100 kHz, at 100 °C). This has a penalty due to the DC resistance. To further optimize the losses, each turn (or layer) may be a variable thickness. This results in a further loss reduction due to lower proximity losses.

The above discussion illustrates that there are turns within the windings 11, 12 of the transformer 10 that exhibit no proximity losses, only skin effect AC resistance losses introduced by high frequency operation. These turns may be as arbitrarily thick as required to include cooling passages for liquid to flow through. By using helical turns, for example, a liquid-cooled winding is very compact and provides an optimum surface area to cool the remaining turns of the windings 11, 12.

More than two liquid cooled turns may be used for the primary and secondary windings 11, 12, by interleaving the primary and secondary windings 11, 12. The turns that are liquid cooled may easily be determined by drawing an mmf diagram of the internal winding fields as shown in Fig. 3.

Fig. 4 illustrates a top view of an embodiment of a transformer 10 in accordance with the principles of the present invention. The transformer 10 is comprised of a primary winding 25 and a secondary winding 15. The secondary winding 15 is formed from two halves, with an upper half disposed above of the primary winding 25 and a lower half disposed below the primary winding 25. The primary winding 25 is comprised of at least one cooling turn having inlet and output ports or couplings 19. The cooling turn is typically a hollow tube that may have any desired cross section that supports good thermal conduction.

Fig. 5 is a side view of the transformer 10 of Fig. 3. Fig. 5 illustrates the construction of the transformer 10 in more detail. The transformer 10 is constructed such that the upper and lower halves of the secondary winding 15 are secured to exposed surfaces of the primary winding 25 by means of thermally conductive adhesive, for example. An insulator 37 is disposed on exposed surfaces of the respective upper and lower halves of the secondary winding 15 and covering the coolant turn of the primary winding 25. The insulator 37 may be bonded to the respective windings 11, 12 by means of adhesive, or epoxy, for example.

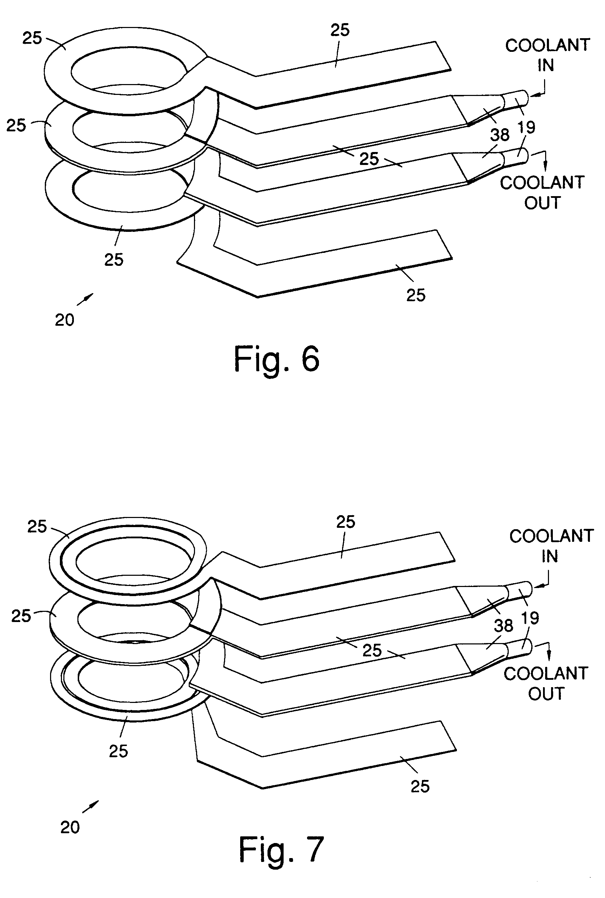

Fig. 6 is an exploded view of an embodiment of a transformer 10 in accordance with the principles of the present invention. The transformer 10 of Fig. 6 has flat helical primary and secondary windings 11, 12, although a spiral shape or other shape having a relatively large surface area may be employed. The primary winding 25 is a flat tube that has tapered portions 38 that transition to round output couplings 19. The secondary winding 15 is comprised of thin copper foil, for example and is bonded or adhered to the primary winding 25 by adhesive, such as epoxy, for example.

Thermal limitations are worst for electric vehicle induction coupled transformers (i.e. where the transformer primary winding is designed to be physically inserted into a transformer core), since there is relatively poor thermal contact between the primary winding 25 and the transformer core of the secondary winding 15. In this application, the primary winding 25 of the transformer 10 is referred to as a probe or paddle. Metallic coolant heat exchangers typically cannot be used in this application because they are in immersed in a high magnetic field, which would result in the introduction of large eddy currents. This causes very large power losses in the liquid passages and thermal problems, because the coolant turn must also be cooled. Only a metallic coolant turn, used as the center turn is practical.

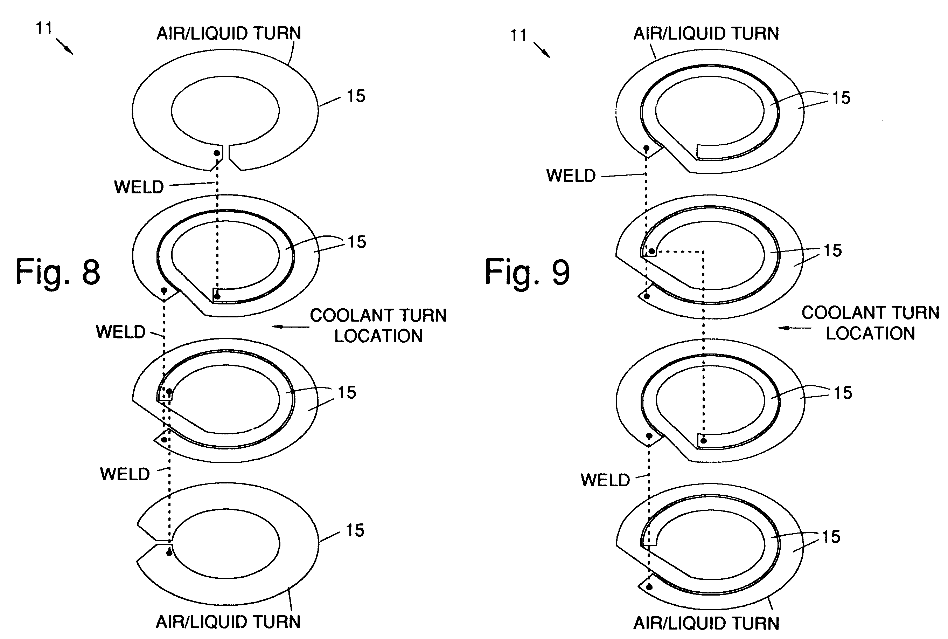

By way of example, Fig. 8 shows an exploded view of a helical/partial spiral design of windings that may be used in the transformer 10 of Fig. 4, and Fig. 9 shows an exploded view of a helical/spiral design of windings that may be used in the transformer 10 of Fig. 4. In Fig. 8, the windings comprise three turns each, while in Fig. 9, the windings comprise four turns each. The air or liquid cooled turn is the outermost turn of each design.

Thus there has been described a new and improved high frequency transformer having primary and secondary windings with at least one internally liquid cooled turn. It is to be understood that the above-described embodiment is merely illustrative of some of the many specific embodiments which represent applications of the principles of the present invention. Clearly, numerous and other arrangements can be readily devised by those skilled in the art without departing from the scope of the invention.

## Claims

1. A high frequency transformer (10) characterized by:

   a primary winding (11) comprising a hollow metallic coolant turn for transmitting cooling fluid therethrough; and

   a secondary winding (12) comprising a plurality of conductive turns that are coupled to the primary winding (11).

2. The high frequency transformer (10) of Claim 1 wherein the hollow metallic coolant turn is characterized by a flat helix winding.

3. The high frequency transformer (10) of Claim 1 wherein the hollow metallic coolant turn is characterized by a flat spiral winding.

4. The high frequency transformer (10) of Claim 1 wherein the primary winding (11) ia further characterized by an additional plurality of conductive turns.

5. The high frequency transformer (10) of Claim 4 wherein the additional plurality of conductive turns of the primary winding (11) are thermally bonded by means of adhesive (31) to the hollow metallic coolant turn.

6. The high frequency transformer (10) of Claim 2 wherein the primary winding (11) is further characterized by an additional plurality of conductive turns that each comprise flat spiral windings.

7. The high frequency transformer (10) of Claim 1 wherein the primary winding (11) is characterized by an inductively coupled probe for use in an electric vehicle battery charger.

8. The high frequency transformer (10) of Claim 1 wherein the secondary winding (12) is characterized by a hollow conductive coolant turn for transmitting cooling fluid therethrough that is an outer turn of the secondary winding.

9. The high frequency transformer (10) of Claim 8 wherein the secondary winding (12) is further characterized by an additional plurality of conductive turns.

10. The high frequency transformer (10) of Claim 9 wherein the additional plurality of conductive turns of the secondary windings (12) are thermally bonded by means of adhesive (31) to the respective hollow conductive coolant turn thereof.

# Fig. 1

POWER SOURCE 27

PUMP 42

HEAT EXCHANGER 43

FAN 44

REFRIGERATOR UNIT 45

41

40

26

26a

32

29

20

23

22a

22b

36

25

24

28

30

EP 0 680 055 A1

Fig. 2

EP 0 680 055 A1

# Fig. 3

2 A-T·······

1 A-T·····

······ 0 mmf

······· -1 A-T

······· -2 A-T

25

15

SA1    SA2        P1    P2    P3        SB1    SB2

1/2 SECONDARY          PRIMARY          1/2 SECONDARY
2 TURNS                 3 TURNS              2 TURNS

Fig. 4

15
17
19
25
15
15
17

Fig. 5

10
17    15    11
31
15
31    17
31
25
20
17
31
15
14
17    15    11
19

25 25 COOLANT
IN

25 38 19

25 COOLANT
OUT

25

25

20

## Fig. 6

25 25 COOLANT
IN

25 38 19

25 COOLANT
OUT

25

25

20

## Fig. 7

Fig. 9

Fig. 8

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-2 836 802 (WESTINGHOUSE)<br>* column 2, line 72 - column 3, line 7 *<br>--- | 1,2,6,8 | H01F27/28<br>H01F27/10<br>H01F38/14 |
| X | DE-A-26 45 536 (TOCCO STEL) 14 April 1977<br>* page 14, paragraph 2 *<br>--- | 1,3 | |
| A | US-A-3 878 492 (TJERNSTEOM OVE) 15 April 1975<br>* figures 1-3 *<br>--- | 1,4,9 | |
| A | WO-A-84 00638 (SCHWARTZ CHARLES A) 16 February 1984<br>* page 14, line 20 - line 25 *<br>--- | 1,3-5,10 | |
| A | EP-A-0 552 738 (HUGHES AIRCRAFT CO) 28 July 1993<br>* figures 1,2 *<br>--- | 7 | |
| A | US-A-3 518 394 (DAWSON CHESTER H) 30 June 1970<br>--- | | |
| A | DE-A-43 26 583 (ZINK MANFRED) 31 March 1994<br>----- | | TECHNICAL FIELDS SEARCHED (Int.Cl.6)<br><br>H01F |

The present search report has been drawn up for all claims

| Place of search | Date of completion of the search | Examiner |
|---|---|---|
| THE HAGUE | 3 August 1995 | Vanhulle, R |

EPO FORM 1503 03.82 (P04C01)